# EUROPEAN PATENT SPECIFICATION

(11) **EP 0 945 374 B1**
(45) Date of publication and mention of the grant of the patent: **14.08.2002**
(21) Application number: 99830143.6
(22) Date of filing: 17.03.1999
(51) Int. Cl.: B65G 47/14, B65G 47/24

(54) **Device for orienting containers, in particular empty bottles made of plastic**
Vorrichtung zum Ausrichten von Behältern, insbesondere von leeren Plastikflaschen
Dispositif pour orienter des récipients, en particulier des bouteilles vides en plastique

(30) Priority: 24.03.1998 IT PR980018
(43) Date of publication of application: 29.09.1999
(73) Proprietor: PROCOMAC S.p.A., 43038 Sala Baganza (Parma) (IT)
(72) Inventor: Van Neste, Yvon, 43046 Ozzano Taro (Parma) (IT)
(74) Representative: Gotra, Stefano

(56) References cited:
- IT-B- 1 278 243
- IT-B- 1 288 035
- IT-B- 1 288 040
- US-A- 4 798 277

## Description

The present invention relates to a device for directing and straightening containers, in particular empty containers made of plastic or PET.

Italian Patent IT 1278243B in the name of the same Applicants discloses a directing and straightening device comprising a loading hopper provided with at least one opening through which the containers are introduced in a random manner; first distribution means for conveying said containers into a peripheral annular zone of the directing device, selecting means for arranging the containers in a substantially reclined position, in special locations or cells of said peripheral annular zone which are intended to receive individual containers and define a single common support surface for the containers; straightening means for bringing each container in an erect position and correctly oriented with its bottom resting surface downwards opposite one or more falling and straightening zones; and second distribution means for conveying the erect containers towards an exit zone where they may be received by transportation means; wherein the selecting means comprise a shutter or wall associated with each cell and movable vertically so as to pass from a rest position where it is not interfering with the first distribution means to an active position for protecting the respective cell, and said selecting means are arranged so that straightening of the containers occurs in a zone not higher than the level defined by the container travel or support surface in the locations or cells.

Three falling zones arranged at 120° are provided, where the containers are straightened inside straightening hoppers underneath which there are receiving compartments provided with four-bar linkage structures (each of which acting on a set of three compartments) which allow movements thereof on a horizontal surface tangentially with respect to the loading hopper.

In this way it is possible, for each complete rotation performed by the loading hopper, to fill three different compartments located underneath the same straightening hopper, with a productivity which is essentially tripled compared to the case where the straightening hoppers and the compartments are fixed.

However, the solution described above envisages a relative movement between the top part of the straightening hoppers and the bottom part of the compartments so as to allow phase-displacement of the latter and filling of three compartments for each rotation of the loading hopper.

Moreover it is necessary to provide a special extraction device for removal of the containers from the straightening device, having a special drive system for connection to a pneumatic conveyor.

The presence of the extraction device increases the overall dimensions of the plant.

An object of the present invention is that of eliminating the abovementioned drawbacks and providing a straightening and directing device which makes it possible to avoid the use of the extraction device and special transmission means, thus reducing the overall dimensions and complexity of the plant.

A further object is that of making extraction possible in several zones of the extractor, including 3 or 4 different zones.

Said objects are fully achieved by the straightening and directing device according to the present invention, which is characterized by the contents of the claims indicated below and in particular by the fact that the means for moving the compartments are formed so as to produce phase-displacement between the compartments and the straightening hoppers, while maintaining the same linear speed of the compartments and the straightening hoppers, at least in certain specific zones, preferably the falling and straightening zones.

Said moving means comprise a chain which follows, along certain sections, the external side surface of the loading hopper, moving away from it along other sections where exiting of the containers from the straightening and directing device occurs, produced by rotation of the loading hopper.

Falling of the containers occurs in 3 or 4 different zones which are located respectively at 120° or at 90°.

A preferred embodiment is illustrated purely by way of a non-limiting example in the description and in the accompanying plates of drawings in which:

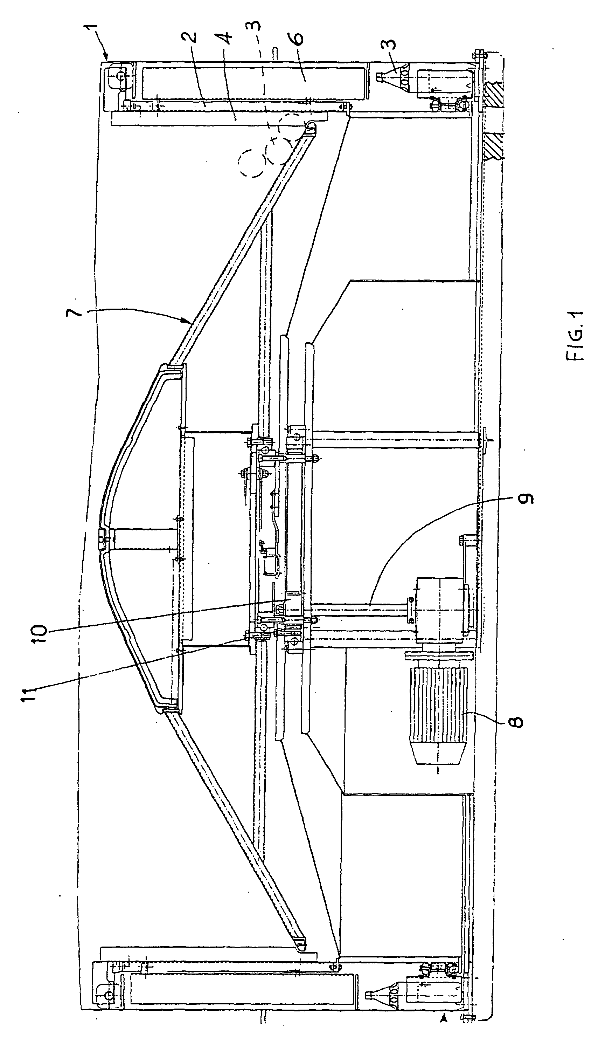

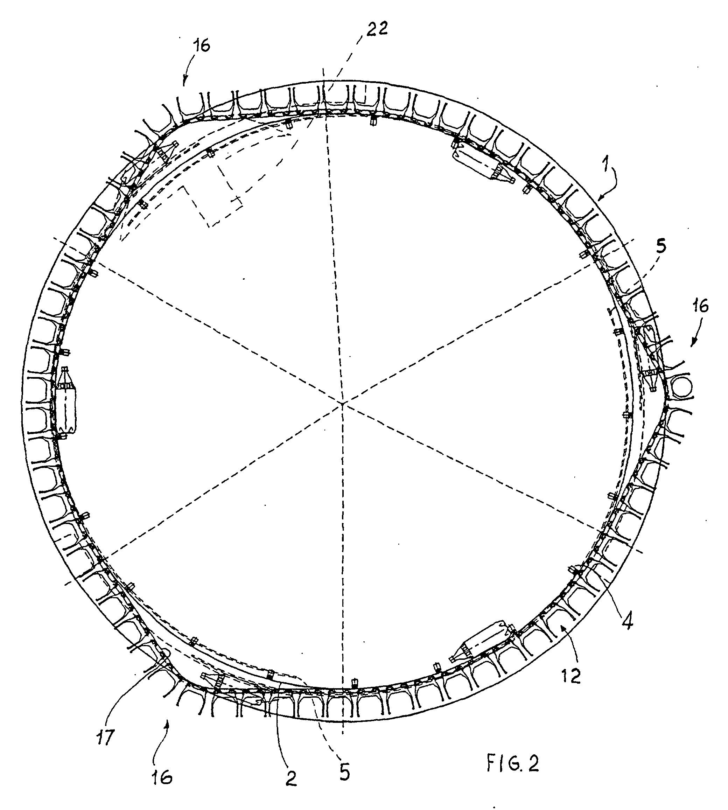

- Figures 1 and 2 show respectively a sectioned front view and plan view of the straightening and directing device;
- Figure 3 shows a plan view of a detail;
- Figures 4 and 5 show respectively a vertically sectioned view of the detail according to Figure 3, along the axes A-A and B-B of Figure 3;
- Figure 6 show the detail of Figure 3 in a different operating position;
- Figure 7 shows a vertically sectioned view of the detail according to Figure 6, along the axis C-C of Figure 6.

With reference to the Figures, 1 denotes in its entirety a fixed frame of a directing and straightening device housing, internally, movable parts comprising a rotating loading hopper 2 into which empty plastic containers 3 are fed in a random manner.

In the present description reference will be made, in connection with the common parts, to the type of directing and straightening device already described in the patent IT 1288035B and IT 1288040B, in the name of the same Applicants, but the present invention may also be applied to other models of directing device.

The internal wall of the hopper 2 is fitted with a plurality of elements 4 which, in association with helices 5, form selecting means and allow, in a known manner, the upward movement of the containers towards an external peripheral zone where they fall into straightening means 6, also of the known type, consisting of straightening hoppers which are fixed to the external side wall of the hopper 2.

The selecting means also help convey the containers in a reclined position into special locations or cells of said peripheral zone.

The hopper 2 houses, internally, fixed parts comprising a cone 7 intended to cause the containers to slide towards a peripheral zone of the hopper and forming first distribution means.

The hopper 2 is made to rotate by a drive system 8 which, by means of a shaft 9, actuates a pinion 10 which meshes with a toothed rim 11 integral with the hopper.

12 denotes compartments which are intended to receive individual containers straightened inside the straightening hoppers 6. The compartments 12 have a C-shape of the known type open towards the outside and formed, for example, by a folded metal sheet, but in a original manner are mounted on a chain 13 with rollers 14.

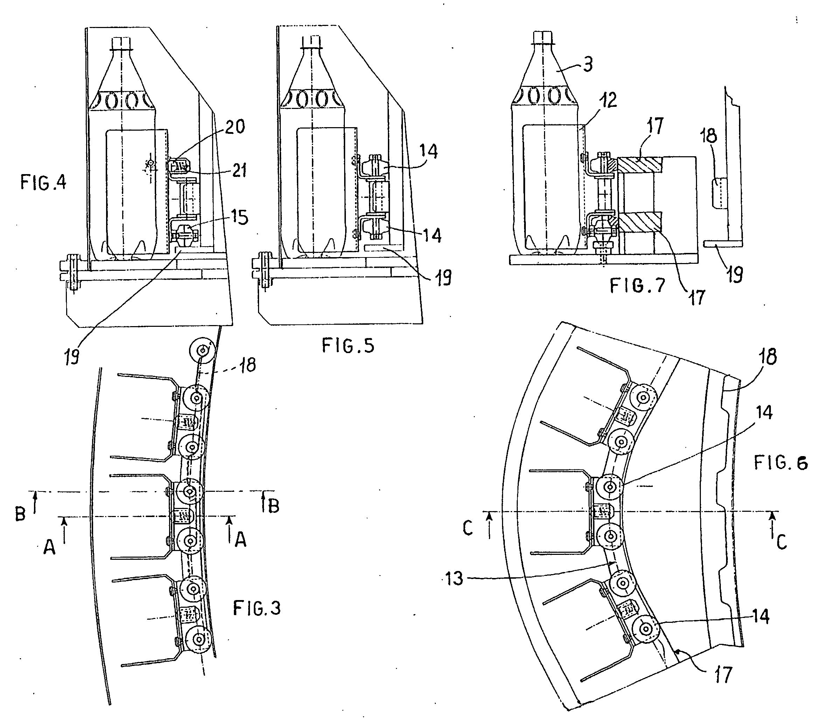

The walls of each compartment 12 are preferably separated from those of the adjacent compartments and two pairs of rollers 14 and a bottom roller 15 are associated with the rear wall of each compartment, as illustrated in Figures 3 to 7.

The chain 13 is wound in an original manner around the external side surface of the loading hopper 2 so that in some zones the rollers 14 are in direct contact with the wall of the hopper 2 without rotating about their axes, while in other zones or possible exit zones 16 the rollers 14 travel on guides 17, rotating about their axes.

The guides 17 are mounted on the outside of the loading hopper 2.

18 denotes a toothing mounted externally over the entire circumference of the loading hopper 2 and formed so as to mesh with the chain 13 between two consecutive compartments in the zones where the rollers 14 are in direct contact with the hopper 2 (as shown in Figures 3, 4 and 5) and so as to remain at a distance from the chain in the possible exit zones 16 (as illustrated in Figures 6 and 7).

The bottom rollers 15 travel on a support surface 19 associated with the rotating loading hopper 2.

Each compartment 12 is mounted on the chain 13 by means of fast-action coupling means comprising projections which are associated with the chain and are inserted into eyelets associated with the compartments and are kept in position by means of a small ball 20 pressed by a spring 21, as illustrated in Figures 3 and 4.

Each of the guides 17, which are three in number in the example shown and arranged at 120° with respect to one another, is mounted on a movable slide 22 (only one of which is schematically shown) having the function of a chain tensioning device.

The guides 17 may also be four in number and arranged at 90°.

Owing to the particular configuration of the chain 13 it is possible to obtain phase-displacement between the compartments 12 and the straightening hoppers 6, while keeping the chain 13 (and hence the compartments 12) and the straightening hoppers 6 at the same linear speed in the falling or meshing zone.

This therefore results in a zero relative speed between the top part of the directing device comprising the straightening hoppers and the bottom part of the compartments, in the falling zone which is the zone where meshing of the toothing 18 with the chain 13 occurs. In fact, recovery of the speed is effected by means of the "lengthened" travel path along the sections of the possible exit zones 16.

The solution illustrated achieves, for each complete rotation performed by the loading hopper, filling of three - or four, in the variant - different compartments located underneath the same straightening hopper, with a productivity which is essentially tripled (or quadrupled, respectively) compared to the case where the straightening hoppers and the compartments are fixed.

This is made possible by the particular second distribution means formed by the compartments 12 and their moving means comprising the chain 13, the rollers 14 and the toothing 18.

The particular configuration of the guides 17 and the chain 13 which, in the possible exit zones 16, lead the compartments with the containers away from the loading hoppers, also allows direct connection of the directing and straightening device to traditional transportation means, such as for example pneumatic conveyors, for removal of the containers, without the need for installation of the special extraction devices or star conveyors envisaged by the known art, and thus resulting in a considerable reduction in the overall dimensions.

It is the loading hopper 2 which produces directly, with its own rotation, exiting of the containers.

The present solution is, moreover, extremely versatile in that it allows the single exit for the containers from the machine to be positioned, as required, in one, two, three or four different possible exit zones 16, by means of simple interruption of the guide 17.

At the exit there is a guide of a pneumatic conveyor of the known type, not shown, on which the containers rest with their projecting neck, while they are moved by air jets.

In the case of a different size of container to be processed, it is sufficient to insert special reducer elements into the compartments 12 or replace the compartments themselves by means of the fast mounting and removal couplings.

According to a variation of embodiment, not shown, it is envisaged that the chain 13 may be provided with its own drive system, located in one of the zones where there is movement away from the loading hopper 2: the chain is actuated by a pinion which meshes with the chain and is kinematically connected to the drive system of the directing device via transmission means.

## Claims

1. Device for directing and straightening containers, in particular empty containers made of plastic, comprising:
- a loading hopper (2) into which the containers (3) are introduced in a random manner;
- first distribution means (7) for conveying said containers into a peripheral annular zone of the directing device;
- selecting means (4, 5) for conveying the containers in inclined position into special locations or cells of said peripheral annular zone which are intended to receive individual containers;
- straightening means (6) for bringing each container in an erect position and correctly oriented with its bottom resting surface downwards opposite one or more falling and straightening zones;
- second distribution means (12) for conveying the erect containers towards an exit zone (16) where they may be received by transportation means;
the hopper (2), the straightening means (6) and the second distribution means (12) rotating about a common central axis;
**characterized in that** it comprises means (13, 14, 18) for moving the second distribution means (12) which are a chain (13) that meshes with hopper (2) and are formed so as to produce phase-displacement between the second distribution means (12) and the straightening means (6), while maintaining the same linear speed of the second distribution means (12) and the straightening means (6) at least in certain zones, the falling and straightening zones,
in the exit zone (16), the second distribution means (12) moving radially away from the loading hopper (2) and the straightening means (6).

2. Directing and straightening device according to Claim 1, in which said moving means comprise a toothing (18) which is wound around the loading hopper (2) and rotates integrally therewith, meshing at least in certain sections with a chain (13) associated with the compartments (12).

3. Directing and straightening device according to Claim 2, in which the chain (13) is provided with rollers (14) which make contact, along first sections, directly with the external side surface of the loading hopper (2), moving away from it along second sections where the rollers (14) travel on a guide (17), said second sections coinciding with possible exit zones (16) for the containers (3) from the directing and straightening device.

4. Directing and straightening device according to Claim 1, in which three possible exit zones (16) arranged at 120° are provided.

5. Directing and straightening device according to Claim 1, in which four possible exit zones (16°) arranged at 90° are provided.

6. Directing and straightening device according to Claim 2, in which each guide (17) is associated with a movable slide (22) for tensioning the chain (13).

7. Directing and straightening device according to Claim 2, **characterized in that** it comprises fast-action couplings for mounting and removal of the compartments (12) onto/from the chain (13).

8. Directing and straightening device according to Claim 1, in which said moving means comprise a pinion which is actuated, via transmission means, by a drive system of the directing device and which meshes with a chain (13) associated with the compartments (12).

## Patentansprüche

1. Vorrichtung zum Aus- und Aufrichten von Behältern inbesondere von leeren Plastikbehältern umfassend:
- einen Beschickungstrichter (2), in den die Behälter (3) durcheinander eingeführt werden;
- erste Verteilungsmittel (7) zum Fördern der Behälter in einen ringförmigen Randbereich der Vorrichtung zum Ausrichten;
- Sortiermittel (4,5) zum Fördern der Behälter in geneigter Stellung in besondere Räume oder Zellen des genannten ringförmigen Randbereiches, die der Aufnahme einzelner Behälter dienen;
- Mittel (6) zum Aufrichten der einzelnen Behälter in eine aufrechte Stellung, in der ihre Aufstandfläche richtig nach unten gegenüber einem oder mehreren Fall- und Aufrichtebereichen ausgerichtet ist;
- zweite Verteilungsmittel (12) zum Fördern der aufrecht stehenden Behälter zu einem Austrittsbereich (16), wo sie an Transportmittel übergeben werden;
wobei der Trichter (2), die Mittel zum Aufrichten (6) und die zweiten Verteilungsmittel (12) um eine gemeinsame Hauptachse drehen;
**dadurch gekennzeichnet, dass** Mittel zum Bewegen (13, 14, 18) der zweiten Verteilungsmittel (12) vorgesehen sind, die aus einer mit dem Trichter (2) kämmenden Kette (13) bestehen und so ausgebildet sind, dass sie eine Phasenverschiebung zwischen den zweiten Verteilungsmitteln (12) und den Mitteln zum Aufrichten (6) herstellen, wobei jedoch die zweiten Verteilungsmittel (12) und die Mittel zum Aufrichten (6) zumindest über bestimmte Bereiche, die Fall- und Aufrichtebereiche, die gleiche lineare Geschwindigkeit haben,
wobei sich die zweiten Verteilungsmittel (12) in dem Austrittsbereich (16) radial vom Beschickungstrichter (2) und den Mitteln zum Aufrichten (6) wegbewegen.

2. Vorrichtung zum Aus- und Aufrichten nach Anspruch 1, bei der die genannten Bewegungsmittel eine um den Beschickungstrichter (2) laufende Verzahnung (18) umfassen, die sich zusammen mit dem Trichter dreht und dabei zumindest bereichsweise mit einer den Aufteilungen (12) zugeordneten Kette (13) kämmt.

3. Vorrichtung zum Aus- und Aufrichten nach Anspruch 2, bei der die Kette (13) Rollen (14) aufweist, die in ersten Bereichen direkt mit der äusseren Seitenfläche des Beschickungstrichters (2) in Berührung stehen, von der sie sich in zweiten Bereichen entfernen, in denen die Rollen (14) in einer Führung (17) gleiten, wobei diese zweiten Bereiche möglichen Austrittsbereichen (16) für die Behälter (3) aus der Vorrichtung zum Ausund Aufrichten entsprechen.

4. Vorrichtung zum Aus- und Aufrichten nach Anspruch 1, bei der drei mögliche, im Abstand von 120° angeordnete Austrittsbereiche (16) vorgesehen sind.

5. Vorrichtung zum Aus- und Aufrichten nach Anspruch 1, bei der vier mögliche, im Abstand von 90° angeordnete Austrittsbereiche (16) vorgesehen sind.

6. Vorrichtung zum Aus- und Aufrichten nach Anspruch 2, bei der jede Führung (17) einem beweglichen Schlitten (22) zum Spannen der Kette (13) zugeordnet ist.

7. Vorrichtung zum Aus- und Aufrichten nach Anspruch 2, **dadurch gekennzeichnet, dass** sie Schnellkupplungen für den Einbau der Aufteilungen (12) in die Kette (13) und den Ausbau aus derselben aufweist.

8. Vorrichtung zum Aus- und Aufrichten nach Anspruch 1, bei der die genannten Mittel ein Ritzel umfassen, das über Vorgelege von einem Antrieb der Vorrichtung zum Ausrichten angetrieben wird und mit einer den Aufteilungen (12) zugeordneten Kette (13) kämmt.

## Revendications

1. Dispositif pour orienter et redresser des récipients, en particulier des bouteilles vides en plastique, comprenant:
- une trémie (2) de chargement dans laquelle les récipients (3) sont introduits de manière aléatoire;
- des premiers moyens de distribution (7) pour convoyer lesdits récipients dans une zone annulaire périphérique du dispositif orienteur;
- des moyens de sélection (4, 5) pour convoyer les récipients dans une position inclinée dans des logements spéciaux ou alvéoles de ladite zone annulaire périphérique conçus pour recevoir individuellement les récipients;
- des moyens de redressement (6) pour porter chaque récipient dans une position érigée et correctement orientée avec une surface d'appui du fond vers le bas en correspondance d'une ou de plusieurs zones de chute et redressement;
- des seconds moyens de distribution (12) pour convoyer les récipients érigés vers une zone de sortie (16) dans laquelle ils peuvent être reçus par des moyens de transport;
la trémie (2), les moyens de redressement (6) et les seconds moyens de distribution (12) pivotant autour d'un axe central commun;
**caractérisé en ce qu'**il comprend des moyens (13, 14, 18) pour mettre en mouvement les seconds moyens de distribution (12), constitués d'une chaîne (13) qui s'engrène avec la trémie (2) et conformés de manière à produire un déphasage entre les seconds moyens de distribution (12) et les moyens de redressement (6), tout en maintenant la même vitesse linéaire des seconds moyens de distribution (12) et des moyens de redressement (6) au moins dans certaines zones, les zones de chute et de redressement;
dans la zone de sortie (16), les seconds moyens de distribution (12) se déplaçant radialement en s'éloignant de la trémie de chargement (2) et des moyens de redressement (6).

2. Dispositif pour orienter et redresser selon la revendication 1, dans lequel lesdits moyens de mise en mouvement comprennent une denture (18) enroulée autour de la trémie de chargement (2) et pivote solidairement à cette dernière, en s'engrènant au moins dans certaines sections avec une chaîne (13) associée aux compartiments (12).

3. Dispositif pour orienter et redresser selon la revendication 2, dans lequel la chaîne (13) est pourvue de rouleaux (14) qui sont en contact, le long des premières sections, directement avec la surface externe latérale de la trémie de chargement (2), en s'en éloignant le long de secondes sections en correspondance desquelles les rouleaux (14) se déplacent sur un guide (17), lesdites secondes sections coïncidant avec les zones de sortie possibles (16) pour les récipients (3) du dispositif pour orienter et redresser.

4. Dispositif pour orienter et redresser selon la revendication 1, dans lequel sont prévues trois zones de sortie possibles (16) disposées à 120°.

5. Dispositif pour orienter et redresser selon la revendication 1, dans lequel sont prévues quatre zones de sortie possibles (16) disposées à 90°.

6. Dispositif pour orienter et redresser selon la revendication 2, dans lequel chaque guide (17) est associé à un coulisseau mobile (22) pour mettre sous tension la chaîne (13).

7. Dispositif pour orienter et redresser selon la revendication 2, **caractérisé en ce qu'**il comprend des attaches rapides pour le montage et le démontage des compartiments (12) sur la chaîne (13).

8. Dispositif pour orienter et redresser selon la revendication 1, dans lequel lesdits moyens de mise en mouvement comprennent un pignon qui est actionné, par l'intermédiare de moyens de transmission, par un système motorisé du dispositif pour orienter et qui s'engrène avec une chaîne (13) associée aux compartiments (12).
